# EUROPEAN PATENT APPLICATION

(11) **EP 4 447 185 A1**
(43) Date of publication of application: **16.10.2024**
(21) Application number: 22956719.3
(22) Date of filing: 29.08.2022
(51) Int. Cl.: H01M 10/058, H01M 4/13, H01M 10/052

(54) **ELECTRODE ASSEMBLY, BATTERY CELL, BATTERY AND ELECTRIC DEVICE**

(71) Applicant: Contemporary Amperex Technology (Hong Kong) Limited, Central, Central And Western District (HK)
(72) Inventor: XU, Hu, Ningde, Fujian 352100 (CN); JIN, Haizu, Ningde, Fujian 352100 (CN); ZHAO, Fenggang, Ningde, Fujian 352100 (CN); NIU, Shaojun, Ningde, Fujian 352100 (CN); ZENG, Yuqun, Ningde, Fujian 352100 (CN)
(74) Representative: Ziebig Hengelhaupt Intellectual Property Attorneys Patentanwaltskanzlei PartGmbB
(86) International application number: PCT/CN2022/115471
(87) International publication number: WO 2024/044883

(57) **Abstract**

The present application provides an electrode assembly, a battery cell, a battery, and an electrical device, belonging to the field of battery technology. The electrode assembly includes a first electrode plate and a second electrode plate laminated in a first direction, with opposite polarities. The first electrode plate includes a first current collector and a first active material layer, the first active material layer is disposed on at least one side of the first current collector in the first direction, and one end of the first current collector is provided with a first tab in a second direction. The first electrode plate further includes a first insulating layer, the first insulating layer and the first active material layer are disposed on the same side of the first current collector, the first insulating layer is disposed at an edge of at least one side of the first active material layer in a third direction, and any two of the first direction, the second direction, and the third direction are perpendicular to each other. The first insulating layer can buffer the first electrode plate to alleviate shedding of the first active material layer due to impact on a shell of a battery cell, so as to prolong the service life of an electrode assembly and improve its use safety.

## Description

### Technical Field

The present application relates to the field of battery technology, and in particular, to an electrode assembly, a battery cell, a battery, and an electrical device.

### Background Art

In recent years, new energy vehicles have developed with a great leap. In the field of electric vehicles, power batteries play an irreplaceable and important role as power sources of the electric vehicles. With the vigorous promotion of new energy vehicles, the demand for power battery products is also increasing. As a core component of new energy vehicles, use safety of batteries is highly required. A battery cell of a battery is obtained by assembling a positive electrode plate, a negative electrode plate and a separator into an electrode assembly (bare cell) in a winding or laminating manner, then putting the bare cell into a shell, and injecting an electrolytic solution.

For some battery cells mentioned in related technologies, researchers found, when the battery cells shake or vibrate during use, service lives of the battery cells are often short and safety hazards such as short circuits are extremely easy to occur due to some unknown reasons. Therefore, it is urgent to determine the reasons for the short service lives of the battery cells or safety hazards caused by shaking or vibration of the battery cells during use, and to develop improvement plans, so as to improve the use safety of the battery cells and prolong the service lives of the battery cells.

### Summary

Embodiments of the present application provide an electrode assembly, a battery cell, a battery, and an electrical device, which can effectively improve use safety of a battery cell and prolong a service life of the battery cell.

In a first aspect, an embodiment of the present application provides a battery cell, including a first electrode plate and a second electrode plate laminated in a first direction, where polarities of the first electrode plate and the second electrode plate are opposite; the first electrode plate includes a first current collector and a first active material layer, the first active material layer is disposed on at least one side of the first current collector in the first direction, and a first tab is formed at one end of the first current collector in a second direction; and the first electrode plate further includes a first insulating layer, the first insulating layer and the first active material layer are disposed on the same side of the first current collector in the first direction, the first insulating layer is disposed at an edge of at least one side of the first active material layer in a third direction, and any two of the first direction, the second direction, and the third direction are perpendicular to each other.

In the foregoing technical solution, the electrode assembly is formed by laminating the first electrode plate and the second electrode plate with opposite polarities in the first direction, the first electrode plate includes the first current collector and the first active material layer disposed on at least one side of the first current collector in the first direction, the first insulating layer is disposed at the edge of at least one side of the first active material layer in the third direction, and when the electrode assembly shakes in the third direction inside a shell of a battery cell, the first insulating layer can buffer the first electrode plate to some extent to better protect the first electrode plate, so as to alleviate shedding of the first active material layer of the first electrode plate due to impact on the shell of the battery cell, which is beneficial to prolonging the service life of the electrode assembly to prolong the service life of the battery cell with this electrode assembly, and is also beneficial to reducing the risk of a short circuit in the electrode assembly due to the shedding of the first active material layer of the first electrode plate, to improve the use safety of the battery cell.

In some embodiments, the second electrode plate has a second active material layer, and at least a portion of the first insulating layer goes beyond an edge of the second active material layer in the third direction.

In the foregoing technical solution, the at least a portion of the first insulating layer in the third direction goes beyond the edge of the second active material layer, that is, when the electrode assembly is located inside the shell of the battery cell, the first insulating layer is closer to the shell than the first active material layer and the second active material layer in the third direction. Therefore, when the electrode assembly collides with the shell due to shaking in the third direction, the first insulating layer can well protect the second electrode plate to alleviate shedding of the second active material layer of the second electrode plate due to impact on the shell, which is conducive to further prolonging the service life of the electrode assembly and improving its use safety.

In some embodiments, the second electrode plate has the second active material layer, and the second active material layer extends out of the edge of the first active material layer in the third direction, where in the first direction, at least a portion of the first insulating layer is located between the first current collector and the second active material layer.

In the foregoing technical solution, the at least a portion of the first insulating layer is disposed between the first current collector and the second active material layer in the first direction, the first insulating layer can provide certain support for the second active material layer, and the portion of the second active material layer that goes beyond the edge of the first active material layer in the third direction can abut against the first insulating layer in the process of laminating the first electrode plate and the second electrode plate in the first direction, so as to effectively reduce the risk of fracture or damage of the second active material layer of the second electrode plate in the laminating process, which is conducive to improving the production quality of the electrode assembly.

In some embodiments, the first insulating layer is disposed at an edge of each of two sides of the first active material layer in the third direction.

In the foregoing technical solution, the first insulating layers are disposed on the two sides of the first active material layer in the third direction, so that the first insulating layers can protect the two sides of the first active material layer in the third direction, to further reduce shedding of the first active material layer of the first electrode plate due to impact on the shell, so as to prolong the service life of the electrode assembly and improve its use safety.

In some embodiments, in the third direction, a width of the first insulating layer is W₁, satisfying 1 mm ≤ W₁ ≤ 5 mm.

In the foregoing technical solution, the width of the first insulating layer in the third direction is 1 mm to 5 mm. On the one hand, a poor protection effect of the first insulating layer on the first electrode plate due to a too small width of the first insulating layer can be alleviated, so as to ensure a protective buffer effect of the first insulating layer on the first active material layer. On the other hand, excessive space occupation by the first insulating layer due to a too large width of the first insulating layer can be alleviated, so as to ensure an energy density of the electrode assembly.

In some embodiments, the first electrode plate further includes a second insulating layer, and the second insulating layer and the first active material layer are disposed on the same side of the first current collector in the first direction, where in the second direction, the second insulating layer is disposed at an edge of a side, away from the first tab, of the first active material layer.

In the foregoing technical solution, the second insulating layer is disposed at the edge of the side, away from the first tab, of the first active material layer in the third direction, and when the electrode assembly shakes in the second direction inside the shell of the battery cell, the second insulating layer can buffer the first electrode plate to some extent to better protect the first electrode plate, so as to alleviate shedding of the first active material layer of the first electrode plate due to impact on the shell in the second direction, which is beneficial to further prolonging the service life of the electrode assembly and reducing the risk of a short circuit in the electrode assembly due to the shedding of the first active material layer of the first electrode plate.

In some embodiments, the second electrode plate has the second active material layer, and at least a portion of the second insulating layer goes beyond an edge of the second active material layer in the second direction.

In the foregoing technical solution, the at least a portion of the second insulating layer in the second direction goes beyond the edge of the second active material layer, that is, when the electrode assembly is located inside the shell of the battery cell, the second insulating layer is closer to the shell than the first active material layer and the second active material layer in the second direction. Therefore, when the electrode assembly collides with the shell due to shaking in the second direction, the second insulating layer can well protect the side, away from the first tab, of the second electrode plate to alleviate shedding of the second active material layer of the second electrode plate due to impact on the shell, which is conducive to further prolonging the service life of the electrode assembly and improving its use safety.

In some embodiments, the second electrode plate has the second active material layer, and the second active material layer extends out of the edge of the first active material layer in the second direction, where in the first direction, at least a portion of the second insulating layer is located between the first current collector and the second active material layer.

In the foregoing technical solution, the at least a portion of the second insulating layer is located between the first current collector and the second active material layer in the first direction, the second insulating layer can provide certain support for the second active material layer, and the portion of the second active material layer that goes beyond the edge of the first active material layer in the second direction can abut against the second insulating layer in the process of laminating the first electrode plate and the second electrode plate in the first direction, so as to effectively reduce the risk of fracture or damage of the second active material layer of the second electrode plate in the laminating process, which is conducive to improving the production quality of the electrode assembly.

In some embodiments, the second insulating layer is disposed at an edge of each of two sides of the first active material layer in the second direction.

In the foregoing technical solution, the second insulating layers are disposed on the two sides of the first active material layer in the second direction, so that the second insulating layers can protect the two sides of the first active material layer in the second direction, to further reduce shedding of the first active material layer of the first electrode plate due to impact on the shell, so as to prolong the service life of the electrode assembly and improve its use safety.

In some embodiments, in the second direction, a width of the second insulating layer is W₂, satisfying 1 mm ≤ W₂ ≤ 5 mm.

In the foregoing technical solution, the width of the second insulating layer in the second direction is 1 mm to 5 mm. On the one hand, a poor protection effect of the second insulating layer on the first electrode plate due to a too small width of the second insulating layer can be alleviated, so as to ensure a protective buffer effect of the second insulating layer on the first active material layer. On the other hand, excessive space occupation by the second insulating layer due to a too large width of the second insulating layer can be alleviated, so as to ensure an energy density of the electrode assembly.

In some embodiments, the first electrode plate is a positive electrode plate, the second electrode plate is a negative electrode plate, the second electrode plate has the second active material layer, and the second active material layer covers the first active material layer in the first direction, where in the second direction and the third direction, a size of the second active material layer is greater than that of the first active material layer.

In the foregoing technical solution, the first electrode plate and the second electrode plate are a positive electrode plate and a negative electrode plate separately, and the second active material layer covers the first active material layer in the first direction, which can effectively reduce the risk of lithium precipitation during the use of the electrode assembly, so as to improve the use safety of the electrode assembly.

In some embodiments, the electrode assembly further includes a separator; and the separator is disposed between the first electrode plate and the second electrode plate to separate the first electrode plate from the second electrode plate.

In the foregoing technical solution, the electrode assembly further includes the separator located between the first electrode plate and the second electrode plate, which can effectively separate the first electrode plate from the second electrode plate to reduce short-circuiting between the first electrode plate and the second electrode plate, thereby reducing safety hazards of the electrode assembly during use.

In a second aspect, an embodiment of the present application further provides a battery cell, including a shell and the foregoing electrode assembly, where the electrode assembly is accommodated in the shell.

In some embodiments, the battery cell further includes a pressure relief mechanism; and the pressure relief mechanism is disposed on the shell and configured to release an internal pressure of the battery cell.

In the foregoing technical solution, the pressure relief mechanism is further disposed on the shell of the battery cell, and the pressure relief mechanism can release the internal pressure of the battery cell in case of thermal runaway of the battery cell, so as to reduce risks of fire and explosion in the battery cell during use and improve the use safety of the battery cell.

In some embodiments, in the third direction, the shell has a first wall portion facing the first insulating layer, and the pressure relief mechanism is disposed on the first wall portion.

In the foregoing technical solution, the pressure relief mechanism is disposed on the first wall portion, facing the first insulating layer, of the shell in the third direction, that is, the pressure relief mechanism is disposed on a side, near the first insulating layer of the first electrode plate, of the shell in the third direction, and the pressure relief mechanism can be spaced from the first active material layer in the third direction to increase the distance between the pressure relief mechanism and the first active material in the third direction, so that there is an enough safety space between the first active material layer and the pressure relief mechanism, the risk of blocking or covering the pressure relief mechanism due to melting of the first active material layer can be reduced in case of thermal runaway of the battery cell, normal use of the pressure relief mechanism and normal valve opening are ensured, and safety hazards of the battery cell during use can be reduced.

In some embodiments, the first electrode plate further includes a second insulating layer, the second insulating layer and the first active material layer are disposed on the same side of the first current collector in the first direction, and the second insulating layer is disposed at the edge of the side, away from the first tab, of the first active material layer in the second direction, wherein in the second direction, the shell has a second wall portion facing the second insulating layer, and the pressure relief mechanism is disposed on the second wall portion.

In the foregoing technical solution, the second insulating layer is disposed on the side, away from the first tab, of the first active material layer in the second direction, the pressure relief mechanism is disposed on the second wall portion, facing the second insulating layer, of the shell in the second direction, that is, the pressure relief mechanism is disposed on a side, near the second insulating layer of the first electrode plate, of the shell in the second direction, and the pressure relief mechanism can be spaced from the first active material layer in the second direction to increase the distance between the pressure relief mechanism and the first active material in the second direction, so that there is an enough safety space between the first active material layer and the pressure relief mechanism, the risk of blocking or covering the pressure relief mechanism due to melting of the first active material layer can be reduced in case of thermal runaway of the battery cell, normal use of the pressure relief mechanism and normal valve opening are ensured, and safety hazards of the battery cell during use can be reduced.

In a third aspect, an embodiment of the present application further provides a battery, including a plurality of foregoing battery cells.

In a fourth aspect, an embodiment of the present application further provides an electrical device, including the foregoing battery cells, where the battery cells are used for providing electrical energy; or including the foregoing battery, where the battery is used for providing electrical energy.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided in some embodiments of the present application;
FIG. 2 is a structural exploded view of a battery provided in some embodiments of the present application;
FIG. 3 is a cross-sectional view of a battery cell provided in some embodiments of the present application;
FIG. 4 is a cross-sectional view of the battery cell provided in some embodiments of the present application;
FIG. 5 is a partial cross-sectional view of an electrode assembly provided in some embodiments of the present application perpendicular to a second direction;
FIG. 6 is a schematic structural diagram of a first electrode plate of the electrode assembly provided in some embodiments of the present application;
FIG. 7 is a schematic structural diagram of a second electrode plate of the electrode assembly provided in some embodiments of the present application;
FIG. 8 is a partial cross-sectional view of the electrode assembly provided in some embodiments of the present application perpendicular to a third direction; and
FIG. 9 is a cross-sectional view of the battery cell provided in some other embodiments of the present application.

Reference numerals: 1000 - vehicle; 100 - battery; 10 - box; 11 - first box body; 12 - second box body; 20 - battery cell; 21 - shell; 211 - first wall portion; 212 - second wall portion; 22 - electrode assembly; 221 - first electrode plate; 2211 - first current collector; 2211a - first tab; 2212 - first active material layer; 2213 - first insulating layer; 2214 - second insulating layer; 222 - second electrode plate; 2221 - second current collector; 2221a - second tab; 2222 - second active material layer; 223 - separator; 23 - positive electrode terminal; 24 - negative electrode terminal; 25 - pressure relief mechanism; 200 - controller; 300 - motor; X - first direction; Y - second direction; Z - third direction.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells or a plurality of battery modules. The box may prevent liquid or other foreign matters from affecting charging or discharging of the battery cells.

The battery cell includes a shell, an electrode assembly, and an electrolytic solution, where the shell is used for accommodating the electrode assembly and the electrolytic solution. The electrode assembly is a component that undergoes electrochemical reactions in the battery cell. The electrode assembly consists of a positive electrode plate, a negative electrode plate, and a separator. The battery cell mainly relies on migration of metal ions between the positive electrode plate and the negative electrode plate to work. The positive electrode plate includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive electrode tab. In an example of a lithium-ion battery, a material of the positive electrode current collector may be aluminum, and the positive electrode active material may be lithium cobaltate, lithium iron phosphate, ternary lithium, lithium manganate, or the like. The negative electrode plate includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative electrode tab. A material of the negative electrode current collector may be copper, and a negative electrode active material may be carbon, silicon, or the like. In order to ensure that no fusing occurs when high current passes through, there is a plurality of positive electrode tabs laminated together, and there is a plurality of negative electrode tabs laminated together.

A material of the separator may be polypropylene (PP), polyethylene (PE), or the like. Moreover, the electrode assembly may be of a wound structure or a laminated structure, and the embodiments of the present application are not limited thereto.

Batteries are an important part of the development of new energy nowadays due to their outstanding advantages such as high energy density, low environmental pollution, high power density, long service life, wide adaptability, and small self-discharge coefficient. With the continuous development of battery technology, higher requirements are put forward in terms of use safety and service life of batteries. A batter consists of a plurality of battery cells, so the use safety and service life of the battery cells determine the use safety and service life of the battery.

The inventor found, during use of the battery cell, the use environment of the battery cell is relatively complex, the battery cell may shake or vibrate to cause the electrode assembly to shake inside the shell of the battery cell, the electrode assembly is prone to collision with the shell, and the active material layer sheds when the electrode assembly collides with the shell, so that the service life of the electrode assembly is short and safety hazards such as short circuits easily occur in the electrode assembly, which are not conducive to improving the use safety of the battery cell and prolonging the service life of the battery cell.

Based on the above considerations, in order to solve the problems of significant safety hazards and short service life of the battery cell during use, the inventor designed an electrode assembly after in-depth research. The electrode assembly includes a first electrode plate and a second electrode plate laminated in a first direction, and polarities of the first electrode plate and the second electrode plate are opposite. The first electrode plate includes a first current collector and a first active material layer, the first active material layer is disposed on at least one side of the first current collector in the first direction, and a first tab is formed at one end of the first current collector in a second direction. The first electrode plate further includes a first insulating layer, the first insulating layer and the first active material layer are disposed on the same side of the first current collector in the first direction, the first insulating layer is disposed at an edge of at least one side of the first active material layer in a third direction, and any two of the first direction, the second direction, and the third direction are perpendicular to each other.

In the electrode assembly of this structure, the electrode assembly is formed by laminating the first electrode plate and the second electrode plate with opposite polarities in the first direction, the first electrode plate includes the first current collector and the first active material layer disposed on at least one side of the first current collector in the first direction, the first insulating layer is disposed at the edge of at least one side of the first active material layer in the third direction, and when the electrode assembly shakes in the third direction inside a shell of a battery cell, the first insulating layer can buffer the first electrode plate to some extent to better protect the first electrode plate, so as to alleviate shedding of the first active material layer of the first electrode plate due to impact on the shell of the battery cell, which is beneficial to prolonging the service life of the electrode assembly to prolong the service life of the battery cell with this electrode assembly, and is also beneficial to reducing the risk of a short circuit in the electrode assembly due to the shedding of the first active material layer of the first electrode plate, to improve the use safety of the battery cell.

The electrode assembly disclosed in the embodiments of the present application may be used, but not limited to, in an electrical device such as a vehicle, a ship, or an aircraft. A power system of the electrical device may be constituted by the battery cell, the battery, and the like disclosed in the present application. In this case, shedding of the active material layer when the electrode assembly collides with the shell is alleviated to improve the use safety of the battery cell and prolong the service life of the battery cell.

An embodiment of the present application provides an electrical device using a battery as a power source. The electrical device may be, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

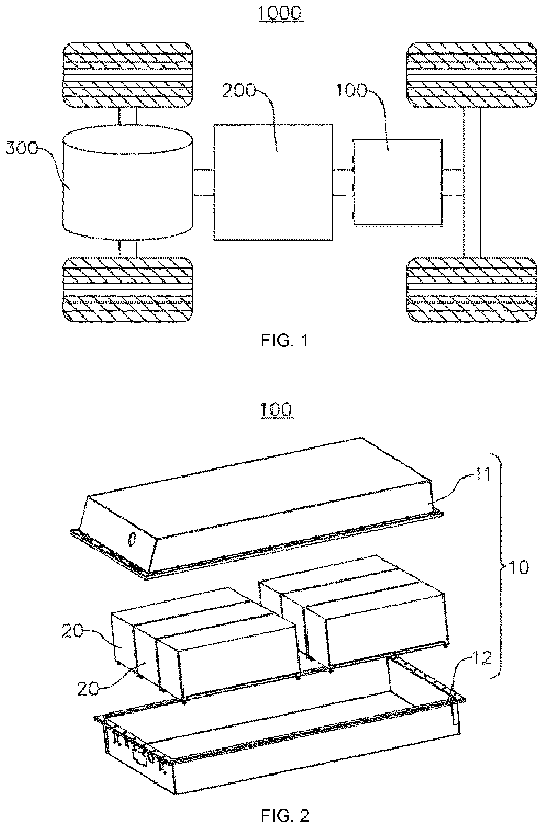

Referring to FIG. 1. FIG. 1 is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2. FIG. 2 is a structural exploded view of a battery 100 provided in some embodiments of the present application. The battery 100 includes a box 10 and battery cells 20, where the battery cells 20 are accommodated in the box 10. The box 10 is used for providing an assembly space for the battery cells 20, and the box 10 may have many structures. In some embodiments, the box 10 may include a first box body 11 and a second box body 12, the first box body 11 and the second box body 12 cover each other, and the first box body 11 and the second box body 12 jointly confine the assembly space for accommodating the battery cells 20. The second box body 12 may be of a hollow structure with an open end, the first box body 11 may be of a plate-like structure, and the first box body 11 covers an open side of the second box body 12, so that the first box body 11 and the second box body 12 jointly confine the assembly space; or each of the first box body 11 and the second box body 12 may be of a hollow structure with an open side, and the open side of the first box body 11 covers the open side of the second box body 12. Of course, the box 10 formed by the first box body 11 and the second box body 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

In the above, each battery cell 20 may be a secondary battery or a primary battery, or may be a lithium-sulfur battery, a sodium-ion battery, or a magnesium-ion battery, but is not limited to this. The battery cell 20 may be cylindrical, flat, cuboid, or in other shapes. For example, in FIG. 2, the battery cell 20 is of a cuboid structure.

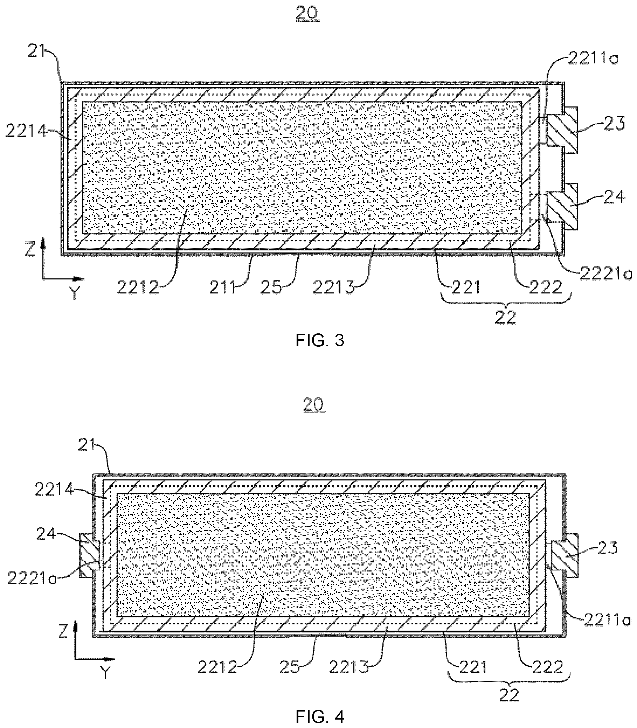

Referring to FIG. 3. FIG. 3 is a cross-sectional view of a battery cell 20 provided in some embodiments of the present application. The battery cell 20 includes a shell 21 and an electrode assembly 22, where the electrode assembly 22 is accommodated in the shell 21.

In the above, the shell 21 may also be used for accommodating an electrolyte, such as an electrolytic solution. The shell 21 may be made of various materials, such as copper, iron, aluminum, steel, or aluminum alloy.

The shell 21 may be in various structural forms. In some embodiments, the shell 21 may include a shell body and an end cover, the shell body is of a hollow structure with an opening on one side, and the end cover is closed to the opening of the shell body to form a sealed connection, so as to form a sealed space for accommodating the electrode assembly and the electrolyte.

When the battery cell is assembled, the electrode assembly may be first put into the shell body, the shell body is filled with the electrolyte, and then the end cover is closed to the opening of the shell body.

The shell 21 may be in various shapes, such as cylindrical or cuboid. The shape of the shell 21 may be determined according to a specific shape of the electrode assembly 22. For example, if the electrode assembly 22 is of a cylindrical structure, the shell 21 may be of a cylindrical structure; or if the electrode assembly 22 is of a cuboid structure, the shell 21 may be of a cuboid structure. For example, in FIG. 3, the shell 21 is of a cuboid structure.

Understandably, the shell 21 is not limited to the above structure. The shell 21 may alternatively be of other structures. For example, the shell 21 includes a shell body and two end covers, the shell body is of a hollow structure with openings on two opposite sides, and one end cover corresponds to one opening of the shell body and forms a sealed connection to form a sealed space for accommodating the electrode assembly 22 and the electrolyte.

It should be noted that the electrode assembly 22 is a component that undergoes electrochemical reactions in the battery cell 20. The electrode assembly 22 may be of a wound structure formed by winding two electrode plates with opposite polarities, or a laminated structure formed by laminating two electrode plates with opposite polarities. For example, in FIG. 3, the electrode assembly 22 is of a laminated structure formed by laminating two electrode plates with opposite polarities, and the electrode assembly 22 is cuboid.

In some embodiments, the battery cell 20 may further include a positive electrode terminal 23 and a negative electrode terminal 24, and both the positive electrode terminal 23 and the negative electrode terminal 24 are mounted on the shell 21. The positive electrode terminal 23 and the negative electrode terminal 24 are both used for electrical connection with the electrode assembly 22 to input or output electrical energy of the battery cell 20. Optionally, the positive electrode terminal 23 and the negative electrode terminal 24 may be directly connected to the electrode assembly 22, for example, by welding or abutting. The positive electrode terminal 23 and the negative electrode terminal 24 may alternatively be indirectly connected to the electrode assembly 22, for example, the positive electrode terminal 23 and the negative electrode terminal 24 abut against or are welded to the electrode assembly 22 through current collecting members.

Optionally, the positive electrode terminal 23 and the negative electrode terminal 24 are disposed in various positions on the shell 21. For example, as shown in FIG. 3, the positive electrode terminal 23 and the negative electrode terminal 24 are disposed on the same side of the shell 21. Of course, in other embodiments, the positive electrode terminal 23 and the negative electrode terminal 24 may alternatively be disposed on different sides of the shell 21. For example, as shown in FIG. 4, which is a cross-sectional view of the battery cell 20 provided in some embodiments of the present application, the positive electrode terminal 23 and the negative electrode terminal 24 are disposed on two opposite sides of the shell 21 separately.

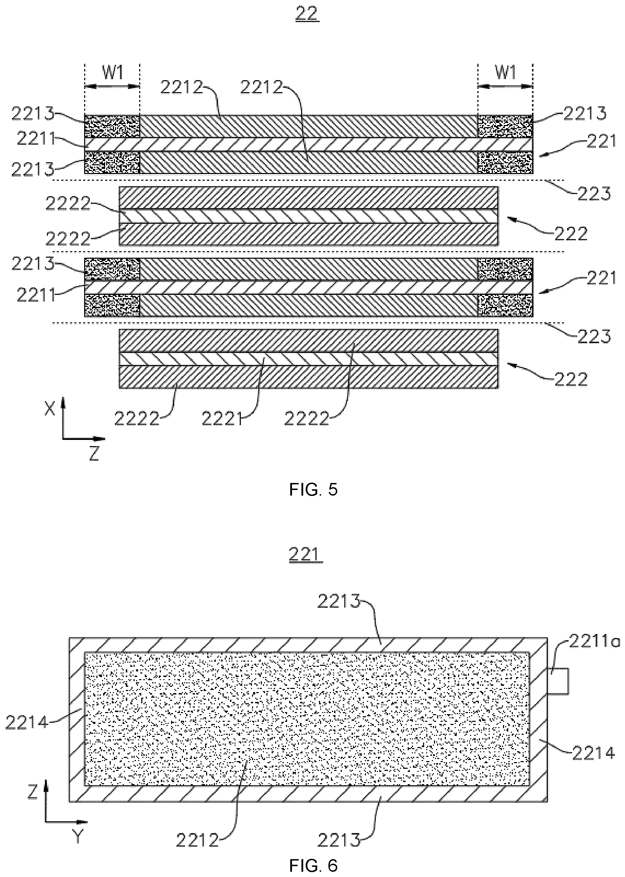

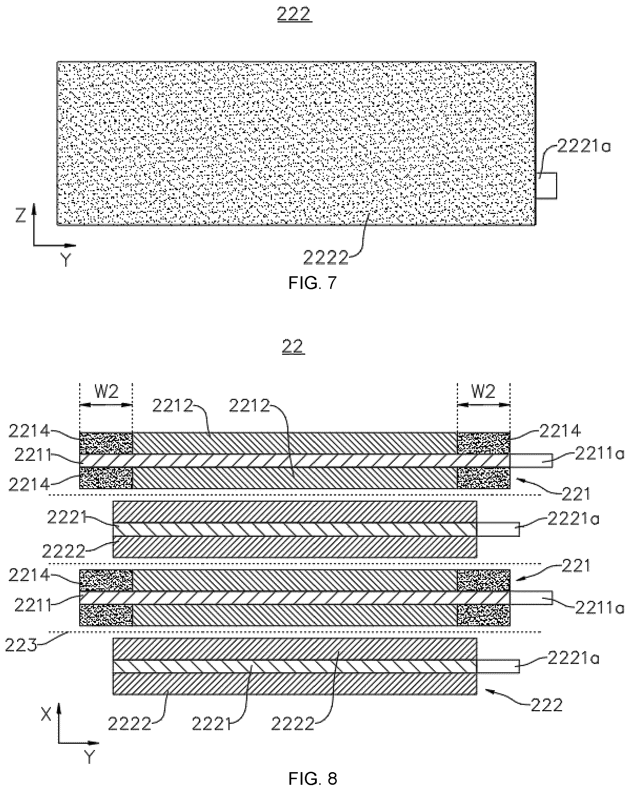

According to some embodiments of the present application, referring to FIG. 3 and further referring to FIGs. 5, 6, and 7, FIG. 5 is a partial cross-sectional view of an electrode assembly 22 provided in some embodiments of the present application perpendicular to a second direction Y, FIG. 6 is a schematic structural diagram of a first electrode plate 221 of the electrode assembly 22 provided in some embodiments of the present application, and FIG. 7 is a schematic structural diagram of a second electrode plate 222 of the electrode assembly 22 provided in some embodiments of the present application. The present application provides an electrode assembly 22. The electrode assembly 22 includes a first electrode plate 221 and a second electrode plate 222 laminated in a first direction X, and polarities of the first electrode plate 221 and the second electrode plate 222 are opposite. The first electrode plate 221 includes a first current collector 2211 and a first active material layer 2212, the first active material layer 2212 is disposed on at least one side of the first current collector 2211 in the first direction X, and one end of the first current collector 2211 is provided with a first tab 2211a in a second direction Y. The first electrode plate 221 further includes a first insulating layer 2213, the first insulating layer 2213 and the first active material layer 2212 are disposed on the same side of the first current collector 2211 in the first direction X, the first insulating layer 2213 is disposed at an edge of at least one side of the first active material layer 2212 in a third direction Z, and any two of the first direction X, the second direction Y, and the third direction Z are perpendicular to each other.

In the above, the polarities of the first electrode plate 221 and the second electrode plate 222 are opposite, that is, the first electrode plate 221 may be a positive electrode plate or a negative electrode plate. Correspondingly, if the first electrode plate 221 is a positive electrode plate, the second electrode plate 222 is a negative electrode plate; or if the first electrode plate 221 is a negative electrode plate, the second electrode plate 222 is a positive electrode plate.

As shown in FIGs. 5 and 7, the second electrode plate 222 includes a second current collector 2221 and a second active material layer 2222, the second active material layer 2222 is disposed on at least one side of the second current collector 2221, and one end of the second current collector 2221 is provided with a second tab 2221a in the second direction Y. When the first electrode plate 221 is a positive electrode plate and the second electrode plate 222 is a negative electrode plate, the first tab 2211a of the first electrode plate 221 is connected to the positive electrode terminal 23 to output a positive electrode of the battery cell 20, and the second tab 2221a of the second electrode plate 222 is connected to the negative electrode terminal 24 to output a negative electrode of the battery cell 20.

For example, in FIG. 6, the first active material layers 2212 are disposed on two sides of the first current collector 2211 in the first direction X, and correspondingly, the first insulating layers 2213 are also disposed on the two sides of the first current collector 2211 in the first direction X. Similarly, the second active material layers 2222 are also disposed on two sides of the second current collector 2221. Of course, in other embodiments, the first active material layer 2212 may alternatively be disposed only on one side of the first current collector 2211 in the first direction X, and correspondingly, the second active material layer 2222 is disposed on a side, facing the first active material layer 2212, of the second current collector 2221.

The first active material layer 2212 and the second active material layer 2222 are active materials disposed on the first electrode plate 221 and the second electrode plate 222 separately. The first active material layer 2212 and the second active material layer 2222 are areas where the first electrode plate 221 and the second electrode plate 222 undergo chemical reactions within the battery cell 20, which mainly relies on migration of metal ions between the first active material layer 2212 of the first electrode plate 221 and the second active material layer 2222 of the second electrode plate 222 to work. It should be noted that the first tab 2211a is a blank area not coated the first active material layer 2212 on the first current collector 2211, and the second tab 2221a is a blank area not coated with the second active material layer 2222 on the second current collector 2221.

If the first electrode plate 221 is a positive electrode plate, the second electrode plate 222 is a negative electrode plate, the first active material layer 2212 is a positive electrode active material layer, a material of the first active material layer 2212 may be lithium cobaltate, lithium iron phosphate, ternary lithium, lithium manganate, or the like, the second active material layer 2222 is a negative electrode active material layer, and a material of the second active material layer 2222 may be carbon, silicon, or the like; or if the first electrode plate 221 is a negative electrode plate, the second electrode plate 222 is a positive electrode plate, the first active material layer 2212 is a negative electrode active material layer, a material of the first active material layer 2212 may be carbon, silicon, or the like, the second active material layer 2222 is a positive electrode active material layer, and a material of the second active material layer 2222 may be lithium cobaltate, lithium iron phosphate, ternary lithium, lithium manganate, or the like.

The first insulating layer 2213 and the first active material layer 2212 are disposed on the same side of the first current collector 2211 in the first direction X, that is, the first insulating layer 2213 is disposed on the side of the first current collector 2211 where the first active material layer 2212 is disposed in the first direction X.

The first insulating layer 2213 is disposed at the edge of at least one side of the first active material layer 2212 in the third direction Z, namely, the first insulating layer 2213 is connected to at least one edge of the first active material layer 2212 in the third direction Z, that is, the first insulating layer 2213 may be disposed only at the edge of one side of the first active material layer 2212 in the third direction Z, or the first insulating layers 2213 may alternatively be disposed at the edges of two sides of the first active material layer 2212 in the third direction Z.

For example, a material of the first insulating layer 2213 may be ceramic, zirconium oxide, fluoroethylene, polymethyl methacrylate, or the like.

The electrode assembly 22 is formed by laminating the first electrode plate 221 and the second electrode plate 222 with opposite polarities in the first direction X, the first electrode plate 221 includes the first current collector 2211 and the first active material layer 2212 disposed on at least one side of the first current collector 2211 in the first direction X, the first insulating layer 2213 is disposed at the edge of at least one side of the first active material layer 2212 in the third direction Z, and when the electrode assembly 22 shakes in the third direction Z inside a shell 21 of a battery cell 20, the first insulating layer 2213 can buffer the first electrode plate 221 to some extent to better protect the first electrode plate 221, so as to alleviate shedding of the first active material layer 2212 of the first electrode plate 221 due to impact on the shell 21 of the battery cell 20, which is beneficial to prolonging the service life of the electrode assembly 22 to prolong the service life of the battery cell 20 with this electrode assembly 22, and is also beneficial to reducing the risk of a short circuit in the electrode assembly 22 due to the shedding of the first active material layer 2212 of the first electrode plate 221, to improve the use safety of the battery cell 20.

According to some embodiments of the present application, as shown in FIGs. 3 and 5, the second electrode plate 222 has the second active material layer 2222, and at least a portion of the first insulating layer 2213 goes beyond an edge of the second active material layer 2222 in the third direction Z.

In the above, the second active material layers 2222 are disposed on two sides of the second current collector 2221 of the second electrode plate 222 in the first direction X, and in the first direction X, in the adjacent first electrode plate 221 and second electrode plate 222, the second active material layer 2222 faces the first active material layer 2212.

The at least a portion of the first insulating layer 2213 goes beyond the edge of the second active material layer 2222 in the third direction Z, that is, the first insulating layer 2213 has a portion that goes beyond the edge of the second active material layer 2222 in the third direction Z.

For example, in FIG. 5, the first electrode plate 221 is a positive electrode plate, the second electrode plate 222 is a negative electrode plate, the second active material layer 2222 covers the first active material layer 2212 in the first direction X, and two ends of the second active material layer 2222 in the third direction Z extend out of two ends of the first active material layer 2212 separately. In the third direction Z, the first insulating layer 2213 extends from an edge of the first active material layer 2212 away from the first active material layer 2212 and extends out of an edge of the second active material layer 2222. Of course, in some embodiments, the entire first insulating layer 2213 may go beyond the edge of the second active material layer 2222, that is, the first insulating layer 2213 and the first active material layer 2212 are spaced in the third direction Z, and the edge of the second active material layer 2222 is located between the first active material layer 2212 and the first insulating layer 2213 in the third direction Z.

The at least a portion of the first insulating layer 2213 in the third direction Z goes beyond the edge of the second active material layer 2222, that is, when the electrode assembly 22 is located inside the shell 21 of the battery cell 20, the first insulating layer 2213 is closer to the shell 21 than the first active material layer 2212 and the second active material layer 2222 in the third direction Z. Therefore, when the electrode assembly 22 collides with the shell 21 due to shaking in the third direction Z, the first insulating layer 2213 can well protect the second electrode plate 222 to alleviate shedding of the second active material layer 2222 of the second electrode plate 222 due to impact on the shell 21, which is conducive to further prolonging the service life of the electrode assembly 22 and improving its use safety.

In some embodiments, as shown in FIG. 5, the second electrode plate 222 has the second active material layer 2222, and the second active material layer 2222 extends out of the edge of the first active material layer 2212 in the third direction Z. In the first direction X, at least a portion of the first insulating layer 2213 is located between the first current collector 2211 and the second active material layer 2222.

In the above, the at least a portion of the first insulating layer 2213 is located between the first current collector 2211 and the second active material layer 2222, that is, the second active material layer 2222 extends out of the edge of the first active material layer 2212 in the third direction Z, there is a gap between the edge of the second active material layer 2222 in the third direction Z and the first current collector 2211, and the first insulating layer 2213 has at least a portion located in the gap between the second active material layer 2222 and the first current collector 2211 in the first direction X.

For example, in FIG. 5, in the third direction Z, the first insulating layer 2213 extends from the edge of the first active material layer 2212 away from the first active material layer 2212 and extends out of the edge of the second active material layer 2222, so that a projection of the edge of the second active material layer 2222 in the first direction X is located within the first insulating layer 2213.

The at least a portion of the first insulating layer 2213 is disposed between the first current collector 2211 and the second active material layer 2222 in the first direction X, the first insulating layer 2213 can provide certain support for the second active material layer 2222, and the portion of the second active material layer 2222 that goes beyond the edge of the first active material layer 2212 in the third direction Z can abut against the first insulating layer 2213 in the process of laminating the first electrode plate 221 and the second electrode plate 222 in the first direction X, so as to effectively reduce the risk of fracture or damage of the second active material layer 2222 of the second electrode plate 222 in the laminating process, which is conducive to improving the production quality of the electrode assembly 22.

According to some embodiments of the present application, as shown in FIGs. 5 and 6, the first insulating layers 2213 are disposed at edges of two sides of the first active material layer 2212 in the third direction Z.

In the above, the first insulating layers 2213 are disposed at the edges of two sides of the first active material layer 2212, that is, in the third direction Z, two first insulating layers 2213 are spaced on the first current collector 2211, and the first active material layer 2212 is located between the two first insulating layers 2213.

The first insulating layers 2213 are disposed on the two sides of the first active material layer 2212 in the third direction Z, so that the first insulating layers 2213 can protect the two sides of the first active material layer 2212 in the third direction Z, to further reduce shedding of the first active material layer 2212 of the first electrode plate 221 due to impact on the shell 21, so as to prolong the service life of the electrode assembly 22 and improve its use safety.

In some embodiments, as shown in FIG. 5, in the third direction Z, a width of the first insulating layer 2213 is W₁, satisfying 1 mm ≤ W₁ ≤ 5 mm.

The width of the first insulating layer 2213 in the third direction Z is 1 mm to 5 mm. On the one hand, a poor protection effect of the first insulating layer 2213 on the first electrode plate 221 due to a too small width of the first insulating layer 2213 can be alleviated, so as to ensure a protective buffer effect of the first insulating layer 2213 on the first active material layer 2212. On the other hand, excessive space occupation by the first insulating layer 2213 due to a too large width of the first insulating layer 2213 can be alleviated, so as to ensure an energy density of the electrode assembly 22.

According to some embodiments of the present application, referring to FIGs. 3 and 6 and further referring to FIG. 8, FIG. 8 is a partial cross-sectional view of the electrode assembly 22 provided in some embodiments of the present application perpendicular to the third direction Z. The first electrode plate 221 further includes a second insulating layer 2214, and the second insulating layer 2214 and the first active material layer 2212 are disposed on the same side of the first current collector 2211 in the first direction X. In the second direction Y, the second insulating layer 2214 is disposed at an edge of a side, away from the first tab 2211a, of the first active material layer 2212.

In the above, the second insulating layer 2214 and the first active material layer 2212 are disposed on the same side of the first current collector 2211 in the first direction X, that is, the second insulating layer 2214 is disposed on the side of the first current collector 2211 where the first active material layer 2212 is disposed in the first direction X.

For example, in FIG. 8, the first active material layers 2212 are disposed on two sides of the first current collector 2211 in the first direction X, and correspondingly, the second insulating layers 2214 are also disposed on the two sides of the first current collector 2211 in the first direction X.

Optionally, a material of the second insulating layer 2214 may be ceramic, zirconium oxide, fluoroethylene, polymethyl methacrylate, or the like.

The second insulating layer 2214 is disposed at the edge of the side, away from the first tab 2211a, of the first active material layer 2212 in the third direction Z, and when the electrode assembly 22 shakes in the second direction Y inside the shell 21 of the battery cell 20, the second insulating layer 2214 can buffer the first electrode plate 221 to some extent to better protect the first electrode plate 221, so as to alleviate shedding of the first active material layer 2212 of the first electrode plate 221 due to impact on the shell 21 in the second direction Y, which is beneficial to further prolonging the service life of the electrode assembly 22 and reducing the risk of a short circuit in the electrode assembly 22 due to the shedding of the first active material layer 2212 of the first electrode plate 221.

According to some embodiments of the present application, as shown in FIGs. 3 and 8, the second electrode plate 222 has the second active material layer 2222, and at least a portion of the second insulating layer 2214 goes beyond an edge of the second active material layer 2222 in the second direction Y.

In the above, the second active material layers 2222 are disposed on two sides of the second current collector 2221 of the second electrode plate 222 in the first direction X.

In the second direction Y, the at least a portion of the second insulating layer 2214 goes beyond the edge of the second active material layer 2222, that is, the second insulating layer 2214 has a portion that goes beyond the edge of the second active material layer 2222 in the second direction Y.

For example, in FIG. 8, the first electrode plate 221 is a positive electrode plate, the second electrode plate 222 is a negative electrode plate, the second active material layer 2222 covers the first active material layer 2212 in the first direction X, and two ends of the second active material layer 2222 in the second direction Y extend out of two ends of the first active material layer 2212 separately. In the second direction Y, the second insulating layer 2214 extends from an edge of the first active material layer 2212 away from the first active material layer 2212 and extends out of an edge of the second active material layer 2222. Of course, in some embodiments, the entire second insulating layer 2214 may go beyond the edge of the second active material layer 2222, that is, the second insulating layer 2214 and the first active material layer 2212 are spaced in the second direction Y, and the edge of the second active material layer 2222 is located between the first active material layer 2212 and the second insulating layer 2214 in the second direction Y.

The at least a portion of the second insulating layer 2214 in the second direction Y goes beyond the edge of the second active material layer 2222, that is, when the electrode assembly 22 is located inside the shell 21 of the battery cell 20, the second insulating layer 2214 is closer to the shell 21 than the first active material layer 2212 and the second active material layer 2222 in the second direction Y. Therefore, when the electrode assembly 22 collides with the shell 21 due to shaking in the second direction Y, the second insulating layer 2214 can well protect the side, away from the first tab 2211a, of the second electrode plate 222 to alleviate shedding of the second active material layer 2222 of the second electrode plate 222 due to impact on the shell 21, which is conducive to further prolonging the service life of the electrode assembly 22 and improving its use safety.

In some embodiments, as shown in FIG. 8, the second electrode plate 222 has the second active material layer 2222, and the second active material layer 2222 extends out of the edge of the first active material layer 2212 in the second direction Y. In the first direction X, at least a portion of the second insulating layer 2214 is located between the first current collector 2211 and the second active material layer 2222.

In the above, the at least a portion of the second insulating layer 2214 is located between the first current collector 2211 and the second active material layer 2222, that is, the second active material layer 2222 extends out of the edge of the first active material layer 2212 in the second direction Y, there is a gap between the edge of the second active material layer 2222 in the second direction Y and the first current collector 2211, and the second insulating layer 2214 has at least a portion located in the gap between the second active material layer 2222 and the first current collector 2211 in the first direction X.

For example, in FIG. 8, in the second direction Y, the second insulating layer 2214 extends from the edge of the first active material layer 2212 away from the first active material layer 2212 and extends out of the edge of the second active material layer 2222, so that a projection of the edge of the second active material layer 2222 in the first direction X is located within the second insulating layer 2214.

The at least a portion of the second insulating layer 2214 is located between the first current collector 2211 and the second active material layer 2222 in the first direction X, the second insulating layer 2214 can provide certain support for the second active material layer 2222, and the portion of the second active material layer 2222 that goes beyond the edge of the first active material layer 2212 in the second direction Y can abut against the second insulating layer 2214 in the process of laminating the first electrode plate 221 and the second electrode plate 222 in the first direction X, so as to effectively reduce the risk of fracture or damage of the second active material layer 2222 of the second electrode plate 222 in the laminating process, which is conducive to improving the production quality of the electrode assembly 22.

According to some embodiments of the present application, as shown in FIGs. 6 and 8, the second insulating layers 2214 are disposed at edges of two sides of the first active material layer 2212 in the second direction Y.

In the above, the second insulating layers 2214 are disposed at the edges of two sides of the first active material layer 2212, that is, in the second direction Y, two second insulating layers 2214 are spaced on the first current collector 2211, and the first active material layer 2212 is located between the two second insulating layers 2214.

The second insulating layers 2214 are disposed on the two sides of the first active material layer 2212 in the second direction Y, so that the second insulating layers 2214 can protect the two sides of the first active material layer 2212 in the second direction Y, to further reduce shedding of the first active material layer 2212 of the first electrode plate 221 due to impact on the shell 21, so as to prolong the service life of the electrode assembly 22 and improve its use safety.

In some embodiments, as shown in FIG. 8, in the second direction Y, a width of the second insulating layer 2214 is W₂, satisfying 1 mm ≤ W₂ ≤ 5 mm.

The width of the second insulating layer 2214 in the second direction Y is 1 mm to 5 mm. On the one hand, a poor protection effect of the second insulating layer 2214 on the first electrode plate 221 due to a too small width of the second insulating layer 2214 can be alleviated, so as to ensure a protective buffer effect of the second insulating layer 2214 on the first active material layer 2212. On the other hand, excessive space occupation by the second insulating layer 2214 due to a too large width of the second insulating layer 2214 can be alleviated, so as to ensure an energy density of the electrode assembly 22.

According to some embodiments of the present application, as shown in FIGs. 3, 5, and 8, the first electrode plate 221 is a positive electrode plate, the second electrode plate 222 is a negative electrode plate, the second electrode plate 222 has the second active material layer 2222, and the second active material layer 2222 covers the first active material layer 2212 in the first direction X. In the second direction Y and the third direction Z, a size of the second active material layer 2222 is greater than that of the first active material layer 2212.

In the above, the second active material layer 2222 covers the first active material layer 2212 in the first direction X, that is, in the first direction X, a projection of the first active material layer 2212 on the second active material layer 2222 is located within an area defined by an outer edge of the second active material layer 2222.

In the second direction Y and the third direction Z, the size of the second active material layer 2222 is greater than that of the first active material layer 2212, that is, in the second direction Y and the third direction Z, the second active material layer 2222 extends out of the edge of the first active material layer 2212.

The first electrode plate 221 and the second electrode plate 222 are a positive electrode plate and a negative electrode plate separately, and the second active material layer 2222 covers the first active material layer 2212 in the first direction X, which can effectively reduce the risk of lithium precipitation during the use of the electrode assembly 22, so as to improve the use safety of the electrode assembly 22.

According to some embodiments of the present application, as shown in FIG. 5, the electrode assembly 22 further includes a separator 223, and the separator 223 is disposed between the first electrode plate 221 and the second electrode plate 222 to separate the first electrode plate 221 from the second electrode plate 222.

In the above, the separator 223 serves to separate the first electrode plate 221 from the second electrode plate 222, so as to insulate the first electrode plate 221 and the second electrode plate 222. For example, in FIG. 5, in the first direction X, the separator 223 is disposed between the adjacent first electrode plate 221 and second electrode plate 222.

For example, a material of the separator 223 may be polypropylene, polyethylene, or the like.

The electrode assembly 22 further includes the separator 223 located between the first electrode plate 221 and the second electrode plate 222, which can effectively separate the first electrode plate 221 from the second electrode plate 222 to reduce short-circuiting between the first electrode plate 221 and the second electrode plate 222, thereby reducing safety hazards of the electrode assembly 22 during use.

According to some embodiments of the present application, as shown in FIG. 3, the present application further provides a battery cell 20, including a shell 21 and the electrode assembly 22 in any of the above solutions, where the electrode assembly 22 is accommodated in the shell 21.

In the above, the battery cell 20 further includes a pressure relief mechanism 25, the pressure relief mechanism 25 is disposed on the shell 21, and the pressure relief mechanism 25 is configured to release an internal pressure of the battery cell 20.

The pressure relief mechanism 25 plays a role in releasing the internal pressure of the battery cell 20. The pressure relief mechanism 25 may release the pressure inside the battery cell 20 when the internal pressure or temperature of the battery cell 20 reaches a predetermined value. For example, the pressure relief mechanism 25 may be a component such as an explosion-proof valve, a rupture disc, a gas valve, a pressure relief valve, or a safety valve.

The pressure relief mechanism 25 is further disposed on the shell 21 of the battery cell 20, and the pressure relief mechanism 25 can release the internal pressure of the battery cell 20 in case of thermal runaway of the battery cell 20, so as to reduce risks of fire and explosion in the battery cell 20 during use and improve the use safety of the battery cell 20.

According to some embodiments of the present application, as shown in FIG. 3, in the third direction Z, the shell 21 has a first wall portion 211 facing the first insulating layer 2213, and the pressure relief mechanism 25 is disposed on the first wall portion 211.

In the above, in the third direction Z, the shell 21 has the first wall portion 211 facing the first insulating layer 2213, that is, the first wall portion 211 is a wall, near the first insulating layer 2213 of the first electrode plate 221, of the shell 21 in the third direction Z. If the first insulating layer 2213 is disposed only on one side of the first active material layer 2212 of the first electrode plate 221 in the third direction Z, the first wall portion 211 is one wall facing the first insulating layer 2213 in two opposite walls of the shell 21 in the third direction Z; or if the first insulating layers 2213 are disposed on two sides of the first active material layer 2212 of the first electrode plate 221 in the third direction Z, the first wall portion 211 is any of the two opposite walls of the shell 21 in the third direction Z.

The pressure relief mechanism 25 is disposed on the first wall portion 211, facing the first insulating layer 2213, of the shell 21 in the third direction Z, that is, the pressure relief mechanism 25 is disposed on a side, near the first insulating layer 2213 of the first electrode plate 221, of the shell 21 in the third direction Z, and the pressure relief mechanism 25 can be spaced from the first active material layer 2212 in the third direction Z to increase the distance between the pressure relief mechanism 25 and the first active material in the third direction Z, so that there is an enough safety space between the first active material layer 2212 and the pressure relief mechanism 25, the risk of blocking or covering the pressure relief mechanism 25 due to melting of the first active material layer 2212 can be reduced in case of thermal runaway of the battery cell 20, normal use of the pressure relief mechanism 25 and normal valve opening are ensured, and safety hazards of the battery cell 20 during use can be reduced.

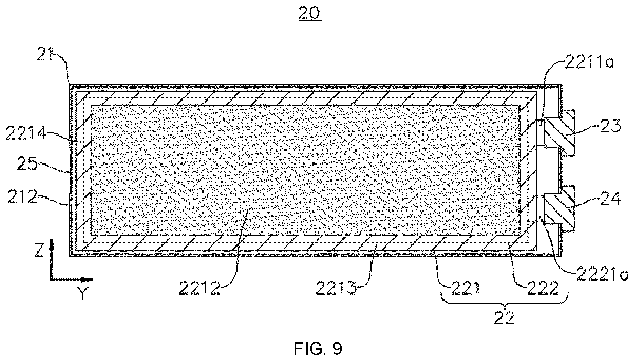

According to some embodiments of the present application, referring to FIG. 9, where FIG. 9 is a cross-sectional view of the battery cell 20 provided in some other embodiments of the present application. The first electrode plate 221 further includes a second insulating layer 2214, the second insulating layer 2214 and the first active material layer 2212 are disposed on the same side of the first current collector 2211 in the first direction X, and the second insulating layer 2214 is disposed at the edge of the side, away from the first tab 2211a, of the first active material layer 2212 in the second direction Y. In the second direction Y, the shell 21 has a second wall portion 212 facing the second insulating layer 2214, and the pressure relief mechanism 25 is disposed on the second wall portion 212.

In the above, the second insulating layer 2214 is disposed on the side, away from the first tab 2211a, of the first active material layer 2212 of the first electrode plate 221 in the second direction Y. In the second direction Y, the shell 21 has the second wall portion 212 facing the second insulating layer 2214, that is, the second wall portion 212 is a wall, away from the first tab 2211a, of the shell 21 in the second direction Y.

The second insulating layer 2214 is disposed on the side, away from the first tab 2211a, of the first active material layer 2212 in the second direction Y, the pressure relief mechanism 25 is disposed on the second wall portion 212, facing the second insulating layer 2214, of the shell 21 in the second direction Y, that is, the pressure relief mechanism 25 is disposed on a side, near the second insulating layer 2214 of the first electrode plate 221, of the shell 21 in the second direction Y, and the pressure relief mechanism 25 can be spaced from the first active material layer 2212 in the second direction Y to increase the distance between the pressure relief mechanism 25 and the first active material in the second direction Y, so that there is an enough safety space between the first active material layer 2212 and the pressure relief mechanism 25, the risk of blocking or covering the pressure relief mechanism 25 due to melting of the first active material layer 2212 can be reduced in case of thermal runaway of the battery cell 20, normal use of the pressure relief mechanism 25 and normal valve opening are ensured, and safety hazards of the battery cell 20 during use can be reduced.

According to some embodiments of the present application, an embodiment of the present application further provides a battery 100. The battery 100 includes a plurality of battery cells 20 in any of the above solutions.

According to some embodiments of the present application, an embodiment of the present application further provides an electrical device. The electrical device includes the battery cells 20 in any of the above solutions, and the battery cells 20 are used for providing electrical energy for the electrical device; or the electrical device includes the battery 100 in any of the above solutions, and the battery 100 is used for providing electrical energy for the electrical device.

The electrical device may be any of the foregoing devices or systems using the battery cell 20 or battery 100.

According to some embodiments of the present application, as shown in FIGs. 3 and 5 to 8, the present application provides an electrode assembly 22. The electrode assembly 22 includes a first electrode plate 221, a second electrode plate 222, and a separator 223. The first electrode plate 221 and the second electrode plate 222 are laminated in a first direction X, the first electrode plate 221 is a positive electrode plate, the second electrode plate 222 is a negative electrode plate, and the separator 223 is disposed between the first electrode plate 221 and the second electrode plate 222 to separate the first electrode plate 221 from the second electrode plate 222. The first electrode plate 221 includes a first current collector 2211 and first active material layers 2212, the first active material layers 2212 are disposed on two sides of the first current collector 2211 in the first direction X, and one end of the first current collector 2211 is provided with a first tab 2211a in a second direction Y. The second electrode plate 222 includes a second current collector 2221 and second active material layers 2222, the second active material layers 2222 are disposed on two sides of the second current collector 2221 in the first direction X, the second active material layer 2222 covers the first active material layer 2212 in the first direction X, and the second active material layer 2222 extends out of an edge of the first active material layer 2212 in the second direction Y and a third direction Z. The first electrode plate 221 further includes first insulating layers 2213 disposed on two sides of the first active material layer 2212 in the third direction Z and second insulating layers 2214 disposed on two sides of the first active material layer 2212 in the second direction Y, the first insulating layer 2213 extends out of an edge of the second active material layer 2222 from the edge of the first active material layer 2212 in the third direction Z, and the second insulating layer 2214 extends out of the edge of the second active material layer 2222 from the edge of the first active material layer 2212 in the second direction Y. Moreover, in the third direction Z, a width of the first insulating layer 2213 is W₁, satisfying 1 mm ≤ W₁ ≤ 5 mm; and in the second direction Y, a width of the second insulating layer 2214 is W₂, satisfying 1 mm ≤ W₂ ≤ 5 mm.

It should be noted that the embodiments in the present application and the features of the embodiments may be combined with each other on a non-conflict basis.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. An electrode assembly, comprising a first electrode plate and a second electrode plate laminated in a first direction, wherein polarities of the first electrode plate and the second electrode plate are opposite;
the first electrode plate comprises a first current collector and a first active material layer, the first active material layer is disposed on at least one side of the first current collector in the first direction, and a first tab is formed at one end of the first current collector in a second direction; and
the first electrode plate further comprises a first insulating layer, the first insulating layer and the first active material layer are disposed on a same side of the first current collector in the first direction, the first insulating layer is disposed at an edge of at least one side of the first active material layer in a third direction, and any two of the first direction, the second direction, and the third direction are perpendicular to each other.

2. The electrode assembly according to claim 1, wherein the second electrode plate has a second active material layer, and at least a portion of the first insulating layer goes beyond an edge of the second active material layer in the third direction.

3. The electrode assembly according to claim 1 or 2, wherein the second electrode plate has a second active material layer, and the second active material layer extends out of an edge of the first active material layer in the third direction, wherein in the first direction, at least a portion of the first insulating layer is located between the first current collector and the second active material layer.

4. The electrode assembly according to any one of claims 1-3, wherein the first insulating layer is disposed at an edge of each of two sides of the first active material layer in the third direction.

5. The electrode assembly according to any one of claims 1-4, wherein in the third direction, a width of the first insulating layer is W₁, satisfying 1 mm ≤ W₁ ≤ 5 mm.

6. The electrode assembly according to any one of claims 1-5, wherein the first electrode plate further comprises a second insulating layer, and the second insulating layer and the first active material layer are disposed on a same side of the first current collector in the first direction,
wherein in the second direction, the second insulating layer is disposed at an edge of a side, away from the first tab, of the first active material layer.

7. The electrode assembly according to claim 6, wherein the second electrode plate has a second active material layer, and at least a portion of the second insulating layer goes beyond an edge of the second active material layer in the second direction.

8. The electrode assembly according to claim 6 or 7, wherein the second electrode plate has a second active material layer, and the second active material layer extends out of an edge of the first active material layer in the second direction, wherein in the first direction, at least a portion of the second insulating layer is located between the first current collector and the second active material layer.

9. The electrode assembly according to any one of claims 6-8, wherein the second insulating layer is disposed at an edge of each of two sides of the first active material layer in the second direction.

10. The electrode assembly according to any one of claims 6-9, wherein in the second direction, a width of the second insulating layer is W₂, satisfying 1 mm ≤ W₂ ≤ 5 mm.

11. The electrode assembly according to any one of claims 1-10, wherein the first electrode plate is a positive electrode plate, the second electrode plate is a negative electrode plate, the second electrode plate has a second active material layer, and the second active material layer covers the first active material layer in the first direction,
wherein in the second direction and the third direction, a size of the second active material layer is greater than a size of the first active material layer.

12. The electrode assembly according to any one of claims 1-11, wherein the electrode assembly further comprises:
a separator disposed between the first electrode plate and the second electrode plate to separate the first electrode plate from the second electrode plate.

13. A battery cell, comprising:
a shell; and
the electrode assembly according to any one of claims 1-12, wherein the electrode assembly is accommodated in the shell.

14. The battery cell according to claim 13, wherein the battery cell further comprises:
a pressure relief mechanism disposed on the shell, wherein the pressure relief mechanism is configured to release an internal pressure of the battery cell.

15. The battery cell according to claim 14, wherein in the third direction, the shell has a first wall portion facing the first insulating layer, and the pressure relief mechanism is disposed on the first wall portion.

16. The battery cell according to claim 14, wherein the first electrode plate further comprises a second insulating layer, the second insulating layer and the first active material layer are disposed on a same side of the first current collector in the first direction, and the second insulating layer is disposed at an edge of the side, away from the first tab, of the first active material layer in the second direction,
wherein in the second direction, the shell has a second wall portion facing the second insulating layer, and the pressure relief mechanism is disposed on the second wall portion.

17. A battery, comprising a plurality of battery cells, each of which is according to any one of claims 13-16.

18. An electrical device, comprising at least one battery cell, each of which is according to any one of claims 13-16, wherein the at least one battery cell is configured for providing electrical energy; or
comprising the battery according to claim 17, wherein the battery is configured for providing electrical energy.
